# EUROPEAN PATENT SPECIFICATION

(11) **EP 2 370 680 B1**
(45) Date of publication and mention of the grant of the patent: **25.03.2015**
(21) Application number: 09829401.0
(22) Date of filing: 16.11.2009
(51) Int. Cl.: F02B 29/04

(54) **CHARGE AIR COOLER FOR COOLING AIR LED TO A SUPERCHARGED COMBUSTION ENGINE**
SYSTEMLUFTKÜHLER ZUM KÜHLEN VON IN EINEN SUPRAGELADENEN VERBRENNUNGSMOTOR GELEITETER LUFT
REFROIDISSEUR D'AIR DE SURALIMENTATION POUR REFROIDIR DE L'AIR CONDUIT À UN MOTEUR À COMBUSTION SURALIMENTÉ

(30) Priority: 28.11.2008 SE 0802494
(43) Date of publication of application: 05.10.2011
(73) Proprietor: Scania CV AB, 151 87 Södertälje (SE)
(72) Inventor: KARDOS, Zoltan, S-151 35 Södertälje (SE); DYBDAL, Rolf, S-610 50 Jönåker (SE)
(86) International application number: PCT/SE2009/051298
(87) International publication number: WO 2010/062241

(56) References cited:
- WO-A1-2004/113815
- WO-A2-2007/025204
- DE-C1- 19 840 616
- GB-A- 1 326 503
- JP-U- 04 042 218
- US-A- 2 498 152
- US-A- 4 932 368
- US-A- 6 029 637
- US-B1- 6 227 179

## Description

### BACKGROUND TO THE INVENTION AND STATE OF THE ART

The present invention relates to a charge air cooler for cooling of air which is led to a supercharged combustion engine according to the preamble of claim 1.

The amount of air which can be supplied to a supercharged combustion engine depends on the pressure of the air but also on the temperature of the air. Supplying as large an amount of air as possible to the combustion engine therefore entails cooling of the compressed air in at least one charge air cooler before it is led to the combustion engine. The compressed air is usually cooled in a charge air cooler situated at a front portion of a vehicle where it is cooled by air at the temperature of the surroundings. The compressed air may thus be cooled to a temperature close to the temperature of the surroundings. The compressed air may alternatively be cooled by coolant in a low-temperature cooling system in which the coolant will be at a lower temperature than the coolant in the cooling system which cools the combustion engine. Here too the air may be cooled to a temperature close to the temperature of the surroundings.

An air-cooled charge air cooler usually comprises an inlet tank which, via an inlet aperture, receives warm compressed air from a line which is connected to a compressor in a turbo unit, a cooling portion in which the compressed air is cooled by surrounding air which flows through the cooling portion, and an outlet tank which, via an outlet aperture, delivers the cooled air to a line which leads the air to the combustion engine. Compressed air is led to and from the charge air cooler via lines which in a fitted state occupy a relatively large amount of space close to the combustion engine. The air lines occupy a particularly large amount of space in cases where the combustion engine is a V-engine and air has to be supplied to the V-engine's cylinders which are arranged in cylinder banks on opposite sides of the engine.

US 2007/0125527 shows a multi-stage plate heat exchanger in which a first fluid is cooled or heated in a first step by a second fluid and in a second step by a third fluid.

### SUMMARY OF THE INVENTION

The object of the present invention is to propose a charge air cooler which makes it possible to use relatively short and compact lines for leading air to and from a charge air cooler. Another object is to propose a charge air cooler which makes possible a stable flow of air to the combustion engine's cylinders.

These objects are achieved with the charge air cooler of the kind mentioned in the introduction which is characterised by the features indicated in the characterising part of claim 1. The charge air cooler thus comprises two outlet apertures through which air is led out from the charge air cooler to a combustion engine. The fact that the charge air cooler has two outlet apertures makes it possible for it to lead air from a first outlet aperture via a first line to the cylinder or cylinders situated nearest to the first outlet aperture, and air from the second outlet aperture via a second line to the cylinder or cylinders situated nearest to the second outlet aperture. With suitable positioning of the outlet apertures, the lines which lead air from the charge air cooler's outlet apertures to the respective cylinders may be relatively short and straight and hence occupy relatively little space. The lines may in particular be short and straight in cases where the charge air cooler is used for cooling air which is led to a V-engine. Air can thus be led to the cylinders in the V-engine's respective cylinder banks from the nearest outlet aperture in substantially completely straight lines. Straight lines also result in low flow losses. A well-balanced and stable flow of air to the combustion engine's cylinders from a charge air cooler which is provided with two outlet apertures can thus be achieved.

According to a preferred embodiment of the present invention, the axis of the inlet aperture and the axes of the two outlet apertures are situated in three different parallel planes and the plane which extends through the axis of the inlet aperture is situated between the plane which extends through the axis of the first outlet aperture and the plane which extends through the axis of the second outlet aperture. If the charge air cooler is used for leading air to a V-engine, the two outlet apertures may each be arranged in the respective vertical plane which extends through the row of cylinders in the V-engine's respective cylinder banks. Air can thus be led in short and straight lines from the outlet apertures to the cylinders in the respective cylinder banks. Arranging the inlet aperture between the outlet apertures makes it possible for the line which leads air to the charge air cooler to also be relatively short and straight.

According to another preferred embodiment of the invention, the inlet aperture and the outlet apertures are situated in a common plane. Such a plane may be another vertical plane which defines a side of the charge air cooler, in which case both the inlet aperture and the outlet apertures will be situated on the same side of the charge air cooler. The charge air cooler is fitted with that side facing towards the combustion engine so that the lines which lead air to and from the charge air cooler may be short and straight. The outlet apertures may be situated in a common plane, while the inlet aperture is situated in a parallel plane which is at a distance from the common plane of the outlet apertures. The outlet apertures are with advantage situated in the same horizontal plane in cases where the cylinders of a combustion engine are normally at the same height level. The inlet aperture may however be situated higher or lower to make it easier to install the line which leads air to the charge air cooler.

The charge air cooler takes the form of a plate heat exchanger in which air is led through plates which are in contact with plates which have a coolant flowing through them. A plate heat exchanger is a compact form of heat exchanger in which effective heat transfer can take place between two media. Such a charge air cooler therefore requires relatively little space. The coolant which cools the charge air is with advantage a coolant in a low-temperature cooling system in which the coolant will be at a lower temperature than the coolant in the cooling system which cools the combustion engine. The charge air cooler comprises two inlet apertures through which coolant is led into the charge air cooler and an outlet aperture through which the coolant is led out from the charge air cooler. The coolant will flow in a substantially opposite direction relative to the air within the plates situated opposite to one another. In favourable circumstances the air may thus be cooled to a temperature close to the temperature at which the coolant is when it is led into the charge air cooler.

### BRIEF DESCRIPTION OF THE DRAWINGS

Preferred embodiments of the invention are described below by way of examples with reference to the attached drawings, in which:
- Fig. 1: depicts schematically a charge air cooler for cooling of air which is led to a supercharged combustion engine according to the present invention,
- Fig. 2: depicts a first embodiment of the charge air cooler as seen from above and
- Fig. 3: depicts the charge air cooler in Fig. 2 as seen in the plane B-B.

### DETAILED DESCRIPTION OF PREFERRED EMBODIMENTS OF THE INVENTION

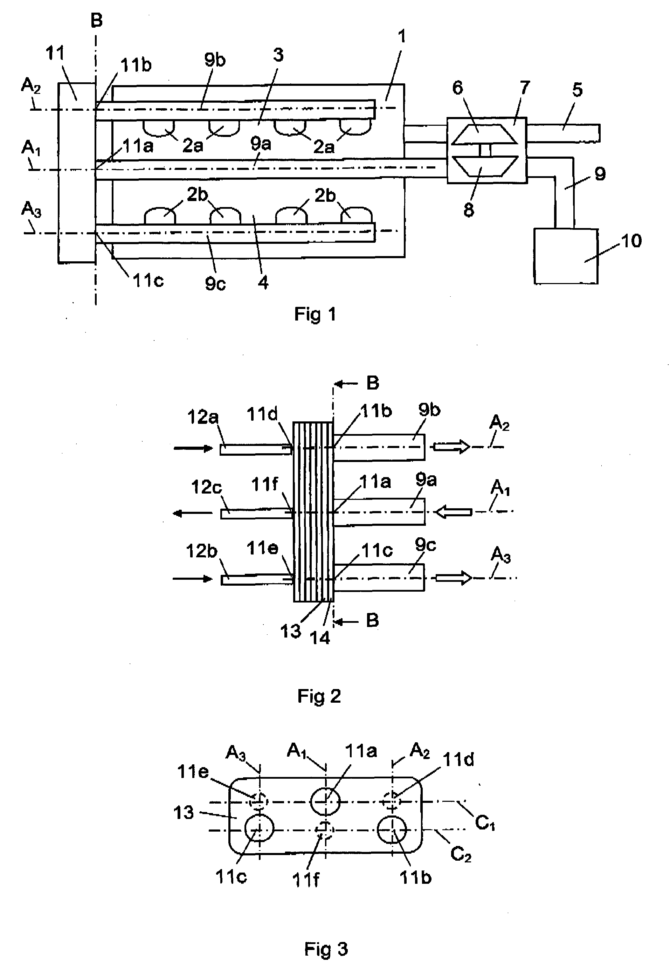

Fig. 1 depicts a supercharged combustion engine 1 as seen from above. The combustion engine 1 is here exemplified as an eight-cylinder V-engine. The combustion engine 1 thus has eight cylinders distributed in a first cylinder bank 3 of four cylinders 2a and a second cylinder bank 4 of four cylinders 2b. The cylinders 2a, 2b in the respective cylinder banks 3, 4 are angled relative to one another at an angle which is normally about 90 degrees. A schematically depicted exhaust line 5 has the function of leading the exhaust gases out from the combustion processes in the cylinders 2a, 2b. The exhaust gases in the exhaust line 5, which will be at above atmospheric pressure, drive a turbine 6 of a turbo unit 7. The turbine 7 is thus provided with driving power which is transmitted, via a connection, to a compressor 8. The compressor 8 compresses air which is drawn into an inlet line 9 via an air filter 10. The air which is compressed by the compressor 8 on one side of the combustion engine 1 is led across to a charge air cooler 11 on the other side of the combustion engine 1 via a line portion 9a. The line portion 9a may be fastened on, or be suspended at a level above, the upper side of the combustion engine It is also possible for the line portion 9a to be below the combustion engine 1. The line portion 9a, which has a substantially straight extent, leads warm compressed air to an inlet aperture 11 a of the charge air cooler 11. After the air has been cooled in the charge air cooler 11, about half of the air is led via a first outlet aperture 11b of the charge air cooler 11 to a straight line 9b which leads the air to the cylinders 2a in the first cylinder bank 3. The remainder of the air is led via a second outlet aperture 11c of the charge air cooler 11 to a straight line 9c which leads the air to the cylinders 2b in the second cylinder bank 4.

Three parallel vertical planes A are marked in Fig. 1. A first vertical plane A₁ extends through the charge air cooler's inlet aperture 11a and the line portion 9a. A second vertical plane A₂ extends through the charge air cooler's first outlet aperture 11b and the straight line 9b. A third vertical plane A₃ extends through the charge air cooler's second outlet aperture 11c and the straight line 9c. The first vertical plane A₁ is situated substantially midway between the second vertical plane A₂ and the third vertical plane A₃. The inlet aperture 11a of the charge air cooler 11 and the two outlet apertures 11b are situated in a common vertical plane B which is perpendicular to the vertical plane A. The inlet aperture 11a and the outlet apertures 11b, 11c are situated at suitable spacing from one another in the plane B so that the lines 9a, 9b, 9c which lead air to and from the charge air cooler have a substantially straight extent and are therefore short. The lines 9a, 9b, 9c thus require less space than conventional lines which have significantly more curved portions. Another advantage of using a charge air cooler 11 which has two outlet apertures 11b, 11c which are connected by short and straight lines 9b, 9c is that the pressure drop in the charge air system will be relatively small when the air is drawn into a cylinder 2a, 2b. The cylinders 2a, 2b can thus be provided with a stable and balanced airflow.

Figs. 2 and 3 depict a charge air cooler 11 which takes the form of a plate heat exchanger. A plate heat exchanger is a compact heat exchanger in which effective heat transfer can take place between two media. The charge air cooler 11 comprises a plurality of plates 13 intended to have air flowing through them and a plurality of plates 14 intended to have a coolant flowing through them. The plates 13, 14 are fastened alternately to one another so that the plates 13 which have air passing through them are surrounded by plates 14 which have coolant flowing through them. The charge air cooler 11 comprises an inlet aperture 11a which is connected to a straight line 9a, and two outlet apertures 11b, 11c which are connected to straight lines 9b, 9c. The inlet aperture 11a and the line 9a are situated in a vertical plane A₁. The outlet line 11b and the line 9b are situated in a vertical plane A₂. The outlet line 11c and the line 9c are situated in a vertical plane A₃. The inlet aperture 11a and two outlet apertures 11b, 11c of the charge air cooler 11 are situated in a common vertical plane B which is perpendicular to the vertical planes A₁, A₂, A₃. The inlet aperture 11a and the outlet apertures 11b, 11c are situated on a side of the charge air cooler 11 which faces towards the combustion engine 1. Fig. 3 shows the inlet aperture 11a situated in a first horizontal plane C₁, while the outlet apertures 11b, 11c are situated in a second horizontal plane C₂ which in this case is at a somewhat lower height level than the first horizontal plane C₁. The charge air cooler 11, on an opposite side which faces away from the combustion engine 1, comprises two inlet apertures 11d, 11e and an outlet aperture 11f for coolant. The inlet apertures 11d, 11e are connected to lines 12a, 12b which lead coolant to the charge air cooler 11. The outlet aperture 11f is connected to a line 12c which leads coolant from the charge air cooler 11.

During operation of the combustion engine 1, compressed warm air is led from the line portion 9a into the charge air cooler 11 via the inlet aperture 11 a. The air is led thereafter, via an undepicted line within the plate heat exchanger, to passages situated within the respective plates 13. The passages are so configured that the air acquires turbulent flow within the plates 13, resulting in good heat transfer between the air and the plates 13. The air is led out from the charge air cooler 11 via two undepicted internal lines each leading to its respective outlet aperture 11b, 11c. The lines 9b, 9c lead the cooled air from the outlet apertures 11b, 11c to the respective cylinders 2a, 2b in the two cylinder banks 3, 4. The coolant is led into the charge air cooler 11 via the inlet apertures 11d, 11e. The coolant is led thereafter via two undepicted lines within the charge air cooler 11 to passages within the respective plates 14 which are so configured that the coolant acquires turbulent flow within the plates 14, resulting in good heat transfer between the coolant and the plates 14. The cold plates 14 thus cool the neighbouring warm plates 13 in the charge air cooler 11. The coolant is thereafter led out from the charge air cooler 11 via an undepicted internal line leading to the outlet aperture 11f, after which the coolant is led away in the line 12c. The coolant is led in a substantially opposite direction in the plates 14 relative to the airflow path in the plates 13. The air may thus be cooled in the charge air cooler 11 to a temperature close to the temperature at which the coolant is when it is led into the charge air cooler 11. The coolant used for cooling the air in the charge air cooler 11 is with advantage coolant from a low-temperature cooling system which will be at a clearly lower temperature than the coolant in the combustion engine's cooling system.

The invention is in no way limited to the embodiments described with reference to the drawings but may be varied freely within the scopes of the claims. In the example depicted, the charge air cooler 11 is used to cool compressed air which is led to an eight-cylinder V-engine. The number of cylinders may of course vary. It is particularly advantageous to use the charge air cooler 11 for cooling of compressed air which is led to a V-engine, but it may with advantage be used also for cooling of air which is led to a supercharged combustion engine of substantially any desired kind, e.g. an in-line engine.

## Claims

1. A charge air cooler (11) for cooling of air which is led to a supercharged combustion engine which has at least a first cylinder (2a) and a second cylinder (2b), which charge air cooler comprises an inlet aperture (11a) through which air is led into the charge air cooler (11), a first outlet aperture (11b) through which air is led out from the charge air cooler (11) via a line (9b) to the first cylinder (2a) and a second outlet aperture (11c) through which air is led out from the charge air cooler (11) via a line (9c) to the second cylinder (2b) **characterised** in that the charge air cooler (11) takes the form of a plate heat exchanger in which air is led through plates (13) which are in contact with plates (14) which have a coolant flowing through them and that the charge air cooler comprises two inlet apertures (11d, 11e) through which coolant is led into the charge air cooler (11), and an outlet aperture (11f) through which the coolant is led out from the charge air cooler (11), wherein the inlet aperture (11a) and the outlet apertures (11b, 11c) of the charge air are arranged on one side of the charge air cooler (11) and that inlet aperture (11d) and the outlet apertures (11e, 11f) of the coolant are arranged on an opposite side of the charge air cooler (11).

2. A charge air cooler according to claim 1, **characterised** in that the axis of the inlet aperture (11a) and the axes of the two outlet apertures (11b, 11c) for the air of the charge air cooler (11) are situated in three different parallel vertical planes (A₁, A₂, A₃) and that the vertical plane (A₁) which extends through the axis of the inlet aperture (11a) is situated between the vertical plane (A₂) which extends through the axis of the first outlet aperture (11b) and the vertical plane A₃ which extends through the axis of the second outlet aperture (11c).

3. A charge air cooler according to claim 2, **characterised** in that the inlet aperture (11 a) and the outlet apertures (11b, 11c) for the air of the charge air cooler (11) are situated in a common vertical plane (B) which is perpendicular to the vertical planes (A₁, A₂, A₃).

4. A charge air cooler according to any one of the foregoing claims, **characterised** in that the axis of the outlet apertures (11b, 11c) for the air of the charge air cooler (11) are situated in a common horizontal plane (C₂), while the axis of the inlet aperture (11a) is situated in a horizontal parallel plane (C₁) which is at a distance from the common horizontal plane (C₂) of the axes of the outlet apertures (11b, 11c).

## Patentansprüche

1. Ladeluftkühler (11) zum Kühlen von Luft, die zu einem aufgeladenen Verbrennungsmotor mit zumindest einem ersten Zylinder (2a) und einem zweiten Zylinder (2b) geleitet wird, wobei der Ladeluftkühler eine Einlassöffnung (11a), durch welche Luft in den Ladeluftkühler (11) geleitet wird, eine erste Auslassöffnung (11b), durch welche Luft aus dem Ladeluftkühler (11) über eine Leitung (9b) zu dem ersten Zylinder (2a) geleitet wird, und eine zweite Auslassöffnung (11c) umfasst, durch welche Luft aus dem Ladeluftkühler (11) über eine Leitung (9c) zu dem zweiten Zylinder (2b) geleitet wird,
**dadurch gekennzeichnet, dass** der Ladeluftkühler (11) die Form eines Plattenwärmetauschers aufweist, wobei Luft durch Platten (13) geleitet wird, die in Kontakt mit Platten (14) stehen, die ein durch diese strömendes Kühlmittel aufweisen, und dass der Ladeluftkühler zwei Einlassöffnungen (11 d, 11e), durch welche das Kühlmittel in den Ladeluftkühler (11) geleitet wird, und eine Auslassöffnung (11f) umfasst, durch welche das Kühlmittel aus dem Ladeluftkühler (11) geleitet wird, wobei die Einlassöffnung (11a) und die Auslassöffnungen (11b, 11 c) für die aufgeladene Luft an einer Seite des Ladeluftkühlers (11) angeordnet sind und wobei die Einlassöffnung (11d) und die Auslassöffnungen (11e, 11f) für das Kühlmittel an einer entgegengesetzten Seite des Ladeluftkühlers (11) angeordnet sind.

2. Ladeluftkühler nach Anspruch 1,
**dadurch gekennzeichnet, dass** die Achse der Einlassöffnung (11a) und die Achsen der zwei Auslassöffnungen (11b, 11c) für die Luft des Ladeluftkühlers (11) in drei unterschiedlichen, parallelen Vertikalebenen (A₁, A₂, A₃) angeordnet sind, und dass die Vertikalebene (A₁), die durch die Achse der Einlassöffnung (11a) verläuft, zwischen der durch die Achse der ersten Auslassöffnung (11 b) verlaufenden Vertikalebene (A₂) und der durch die Achse der zweiten Auslassöffnung (11c) verlaufenden Vertikalebene (A₃) angeordnet ist.

3. Ladeluftkühler nach Anspruch 2,
**dadurch gekennzeichnet, dass** die Einlassöffnung (11a) und die Auslassöffnungen (11b, 11 c) für die Luft des Ladeluftkühlers (11) in einer gemeinsamen Vertikalebene (B) angeordnet sind, die senkrecht zu den Vertikalebenen (A₁, A₂, A₃) ist.

4. Ladeluftkühler nach einem der vorangehenden Ansprüche,
**dadurch gekennzeichnet, dass** die Achsen der Auslassöffnungen (11b, 11 c) für die Luft des Ladeluftkühlers (11) in einer gemeinsamen Horizontalebene (C2) angeordnet sind, wobei die Achse der Einlassöffnung (11a) in einer zu der gemeinsamen Horizontalebene (C2) der Achsen der Auslassöffnungen (11b, 11 c) beabstandeten, parallelen Horizontalebene (C1) angeordnet ist.

## Revendications

1. Refroidisseur d'air de suralimentation (11) pour refroidir de l'air conduit à un moteur à combustion suralimenté qui comporte au moins un premier cylindre (2a) et un deuxième cylindre (2b), lequel refroidisseur d'air de suralimentation comprend une ouverture d'entrée (11a) à travers laquelle de l'air est conduit dans le refroidisseur d'air de suralimentation (11), une première ouverture de sortie (11 b) à travers laquelle de l'air est conduit vers l'extérieur à partir du refroidisseur d'air de suralimentation (11) par l'intermédiaire d'une ligne (9b) jusqu'au premier cylindre (2a) et une deuxième ouverture de sortie (11 c) à travers laquelle de l'air est conduit vers l'extérieur à partir du refroidisseur d'air de suralimentation (11) par l'intermédiaire d'une ligne (9c) jusqu'au deuxième cylindre (2b), **caractérisé en ce que** le refroidisseur d'air de suralimentation (11) prend la forme d'un échangeur de chaleur à plaques dans lequel de l'air est conduit à travers des plaques (13) qui sont en contact avec des plaques (14) qui ont un agent de refroidissement qui s'écoule à travers celles-ci et **en ce que** le refroidisseur d'air de suralimentation comprend deux ouvertures d'entrée (11 d, 11e) à travers lesquelles un agent de refroidissement est conduit dans le refroidisseur d'air de suralimentation (11), et une ouverture de sortie (11f) à travers laquelle l'agent de refroidissement est conduit vers l'extérieur à partir du refroidisseur d'air de suralimentation (11), l'ouverture d'entrée (11a) et les ouvertures de sortie (11b, 11 c) de l'air de suralimentation étant disposées sur un côté du refroidisseur d'air de suralimentation (11), et **en ce que** l'ouverture d'entrée (11d) et les ouvertures de sortie (11e,11f) de l'agent de refroidissement sont disposées sur un côté opposé du refroidisseur d'air de suralimentation (11).

2. Refroidisseur d'air de suralimentation selon la revendication 1, **caractérisé en ce que** l'axe de l'ouverture d'entrée (11 a) et les axes des deux ouvertures de sortie (11 b, 11 c) pour l'air du refroidisseur d'air de suralimentation (11) sont situés dans trois plans verticaux parallèles différents (A₁, A₂, A₃) et **en ce que** le plan vertical (A₁) qui s'étend à travers l'axe de l'ouverture entrée (11a) est situé entre le plan vertical (A₂) qui s'étend à travers l'axe de la première ouverture de sortie (11b) et le plan vertical (A₃) qui s'étend à travers l'axe de la deuxième ouverture de sortie (11c).

3. Refroidisseur d'air de suralimentation selon la revendication 2, **caractérisé en ce que** l'ouverture d'entrée (11 a) et les ouvertures de sortie (11 b, 11 c) pour l'air du refroidisseur d'air de suralimentation (11) sont situées dans un plan vertical commun (B) qui est perpendiculaire aux plans verticaux (A₁, A₂, A₃).

4. Refroidisseur d'air de suralimentation selon l'une quelconque des revendications précédentes, **caractérisé en ce que** les axes des ouvertures de sortie (11b, 11 c) pour l'air du refroidisseur d'air de suralimentation (11) sont situés dans un plan horizontal commun (C₂), tandis que l'axe de l'ouverture d'entrée (11a) est situé dans un plan parallèle horizontal (C₁) qui est à une certaine distance du plan horizontal commun (C₂) des axes des ouvertures de sortie (11 b, 11 c).
